(19) **Europäisches Patentamt**

**European Patent Office**

**Office européen des brevets**

(11) **EP 1 157 317 B1**

(12) **EUROPÄISCHE PATENTSCHRIFT**

(45) Veröffentlichungstag und Bekanntmachung des Hinweises auf die Patenterteilung:
**02.04.2003 Patentblatt 2003/14**

(21) Anmeldenummer: **99966820.5**

(22) Anmeldetag: **01.12.1999**

(51) Int Cl.⁷: **G05B 23/02**

(86) Internationale Anmeldenummer:
**PCT/DE99/03834**

(87) Internationale Veröffentlichungsnummer:
**WO 00/033150 (08.06.2000 Gazette 2000/23)**

(54) **VERFAHREN UND ANORDNUNG ZUR REDUKTION EINER ANZAHL VON MESSWERTEN EINES TECHNISCHEN SYSTEMS**

METHOD AND DEVICE FOR REDUCING A NUMBER OF MEASURED VALUES OF A TECHNICAL SYSTEM

PROCEDE ET DISPOSITIF POUR LA REDUCTION D'UNE PLURALITE DE VALEURS MESUREES D'UN SYSTEME INDUSTRIEL

(84) Benannte Vertragsstaaten:
**DE FR GB**

(30) Priorität: **03.12.1998 DE 19855877**

(43) Veröffentlichungstag der Anmeldung:
**28.11.2001 Patentblatt 2001/48**

(73) Patentinhaber: **SIEMENS AKTIENGESELLSCHAFT 80333 München (DE)**

(72) Erfinder:
- **SCHÄFFLER, Stefan D-86199 Augsburg (DE)**
- **STURM, Thomas D-81673 München (DE)**

(56) Entgegenhaltungen:

| | |
|---|---|
| EP-A- 0 658 833 | EP-A- 0 843 244 |
| WO-A-90/16048 | WO-A-95/06289 |
| US-A- 5 226 118 | US-A- 5 586 066 |

**Beschreibung**

Die Erfindung betrifft ein Verfahren und eine Anordnung zur Reduktion einer Anzahl von Meßwerten eines technischen Systems.

Ein technisches System, z.B. eine Anlage der Verfahrenstechnik, liefert anhand unterschiedlicher Meßwertaufnehmer (Sensoren) eine große Menge Meßwerte pro Zeiteinheit. Im Verlauf mehrerer Tage oder Wochen sammelt sich eine Datenmenge an, die zu bearbeiten eine entsprechend hohe Rechenleistung erfordert. Sollen die Meßwerte zur Anpassung oder Neueinstellung des technischen Systems eingesetzt werden, sind oftmals Operationen notwendig, deren Komplexität nurmehr einen Teil der Meßwerte zuläßt. Nun ist es ein großer Nachteil, willkürlich eine bestimmte Anzahl Meßwerte aus der Menge aller Meßwerte auszuwählen und weiterzuverarbeiten, da Meßwerte geringer Signifikanz, z.B. Meßwerte mit hohen Störeinfldssen, einen beträchtlichen Einfluß auf das Gesamtergebnis haben und dieses deutlich verfälschen.

In [1] ist eine Methode zur Überwachung und Analyse eines Zustandes eines komplexen dynamischen Systems beschrieben, bei dem eine Vielzahl von Statusvariablen zu einer Vielzahl von Zeitpunkten gemessen und die mit Hilfe von mathematisch statistischen Verfahren ausgewertet werden.

Die **Aufgabe** der Erfindung besteht darin, ein Verfahren und eine Anordnung zur Reduktion von Meßwerten anzugeben, wobei gewährleistet wird, daß die verbleibenden Meßwerte eine hohe Signifikanz, im Hinblick auf deren Beschreibung des technischen Systems, aufweisen.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zur Reduktion einer Anzahl von Meßwerten eines technischen Systems angegeben, bei dem die Meßwerte entsprechend vorgegebenen Kriterien in Klassen eingeteilt werden. Die Meßwerte einer Klasse werden bewertet und diejenigen Meßwerte, deren Bewertung unterhalb eines vorgegebenen ersten Schwellwertes liegt, werden aussortiert.

Durch die Aussortierung der Meßwerte ergibt sich eine Reduktion hinsichtlich der Anzahl der Meßwerte. Somit liegen für eine Weiterverarbeitung eine deutlich reduzierte Anzahl von Meßwerten vor. Die Weiterverarbeitung kann mit gegenüber der nicht reduzierten Anzahl von Meßwerten geringerem Rechenaufwand erfolgen.

Eine Weiterbildung besteht darin, daß auch die Klassen selbst bewertet werden. Insbesondere kann eine Klasse, deren Bewertung unterhalb eines vorgegebenen zweiten Schwellwerts liegt, aussortiert werden. Hierdurch ergibt sich eine zusätzliche Reduktion der Anzahl der Meßwerte.

Eine andere Weiterbildung besteht darin, daß ein Kriterium für die Klasseneinteilung darin besteht, daß pro Klasse Meßwerte zu einer Vorgabe von Einstellparametern des technischen Systems bestimmt werden. Typischerweise wird das technische System anhand einer vorgegebenen Anzahl von Einstellparametern eingestellt, nach Einstellung erfolgt eine (zumeist zeitverzögerte) Reaktion des Systems auf die Einstellparameter (Einschwingverhalten, Einschwingvorgang des Systems) Nach Einstellung werden somit eine bestimmte Menge an Meßwerten aufgenommen, die dem Einschwingvorgang zugeordnet werden können, wobei nach abgeschlossenem Einschwingvorgang (Übergang in den stationären Betrieb) weiterhin Meßwerte anfallen, die dem vorgegebenen Satz Einstellparameter zugeordnet werden. Durch Verstellung der Einstellparameter wird eine neue Klasse bestimmt. Alle Meßwerte, die jeweils nach einer Verstellung der Einstellparameter anfallen, gehören in eine eigene Klasse.

Eine andere Weiterbildung besteht darin, daß Meßwerte innerhalb einer Klasse, die dem jeweiligen Einschwingvorgang zugeordnet werden können, aussortiert werden. Zusätzlich können fehlerhafte Meßwerte aussortiert werden. Die Einstellung großer technischer Systeme ist in vielen Fällen auf eine langfristigen stationären Betrieb ausgerichtet. Meßwerte, die sich auf den Einschwingvorgang (von kurzer Dauer im Verhältnis zum stationären Betrieb nach abgeschlossenem Einschwingvorgang) beziehen, werden sinnvoll aussortiert, da durch sie Meßwerte für den stationären Betrieb verfälscht werden. Insbesondere im Rahmen einer Modellierung des technischen Systems, sind die Meßdaten des stationären Verhaltens des technischen Systems interessant.

Eine Ausgestaltung besteht darin, die Anzahl der Meßwerte in einer Klasse dadurch zu reduzieren, daß mindestens ein repräsentativer Wert für die Meßwerte der Klasse bestimmt wird. Solch ein repräsentativer Wert kann sein:

a) ein Mittelwert (z.B. ein gleitender Mittelwert) der Meßwerte der Klasse,
b) ein Maximalwert der Meßwerte der Klasse,
c) ein Minimalwert der Meßwerte der Klasse,
d) ein Median.

Bei Variante d) liegt ein Vorteil darin, daß immer ein Wert bestimmbar ist, den es tatsächlich gibt, wohingegen der Mittelwert a) selbst nicht als Wert vorkommt.

Je nach Anwendungsfall, kann eine geeignete Wahl zur Bestimmung des repräsentativen Werts einer Klasse erfolgen.

Eine ganze Klasse mit Meßwerten kann aussortiert werden, wenn diese weniger als eine vorgegebene Anzahl Meßwerte enthält.

Eine andere Ausgestaltung besteht darin, daß diejenigen Meßwerte aussortiert werden, die um mehr als einen vorgegebenen Schwellwert von einem vorgebbaren Wert verschieden sind. Der vorgebbare Wert kann ein Mittelwert aller Meßwerte der Klasse oder ein zu erwartender Meßwert auf die jeweiligen Einstellparameter des technischen Systems sein.

Eine Weiterbildung besteht darin, daß die in ihrer Anzahl reduzierten Meßwerte zur Simulation und/oder zum Entwurf dieses oder eines anderen technischen Systems eingesetzt werden.

Der Entwurf des technischen Systems kann dabei sowohl eine Anpassung als auch einen Neuentwurf dieses oder eines anderen technischen Systems umfassen.

Auch im Rahmen der Simulation kann anhand der reduzierten Anzahl von Meßwerten das Verhalten des technischen Systems überprüft werden mit dem Ziel, das System zu verändern bzw. ein neues System mit veränderten Vorgaben zu entwickeln.

Auch wird zur Lösung der Aufgabe eine Anordnung zur Reduktion einer Anzahl von Meßwerten eines technischen Systems angegeben, die eine Prozessoreinheit aufweist, welche Prozessoreinheit derart eingerichtet ist, daß die Meßwerte entsprechend vorgegebenen Kriterien in Klassen aufteilbar sind. Meßwerte einer Klasse sind bewertbar, Meßwerte deren Bewertung unterhalb eines vorgegebenen ersten Schwellwerts liegt, werden aussortiert.

Diese Anordnung ist insbesondere geeignet zur Durchführung des erfindungsgemäßen Verfahrens oder einer seiner vorstehend erläuterten Weiterbildungen.

Ausführungsbeispiele der Erfindung werden nachfolgend anhand der Zeichnung dargestellt und erläutert.

Es zeigen

Fig.1     ein Blockdiagramm, das Schritte eines Verfahrens zur Reduktion von Meßwerten enthält;

Fig.2     eine schematische Skizze eines Recovery-Boilers;

Fig.3-5   Eingangsgrößen, Stellgrößen und Ausgangsgrößen des Recovery-Boilers.

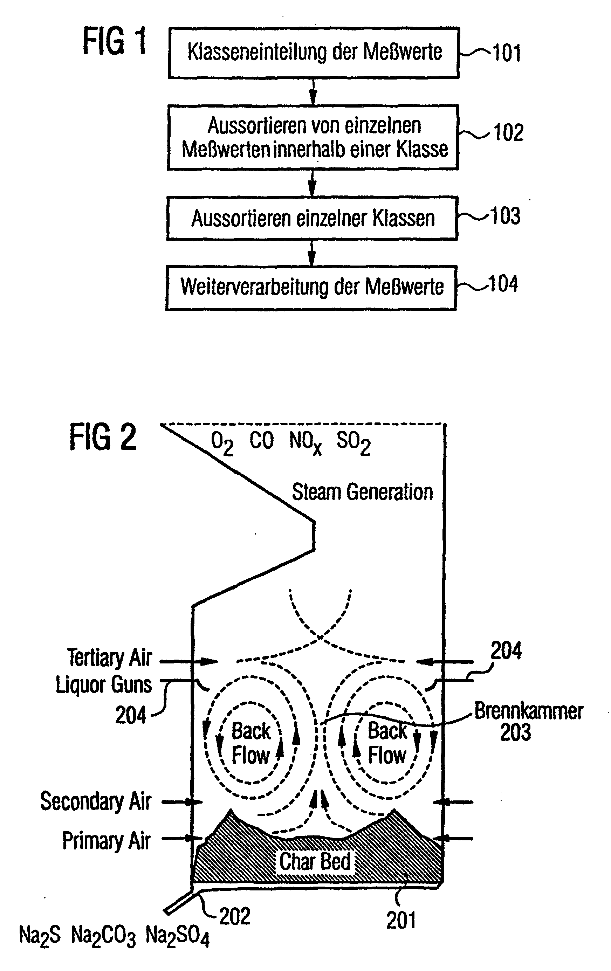

**Fig.1** zeigt ein Blockdiagramm, das Schritte eines Verfahrens zur Reduktion von Meßwerten enthält. In einem ersten Schritt 101 wird eine Klasseneinteilung der Meßwerte vorgenommen. Insbesondere erfolgt die Klasseneinteilung dahingehend, daß in einer Klasse alle Meßwerte, die zu einem Satz Einstellparameter gehören, zusammengefaßt werden. Insoweit begründet jede Veränderung der Einstellparameter des technischen Systems eine neue Klasse. Insbesondere ist mit der Veränderung der Einstellparameter ein Einschwingvorgang des technischen Systems verbunden, der im Gegensatz zu einem stationären Verhalten starke Schwankungen der Meßwerte beinhaltet. In einem Schritt 102 werden einzelne Meßwerte innerhalb einer Klasse aussortiert. Dies können beispielsweise fehlerhafte Meßwerte, also Meßwerte, die eine hohe Abweichung gegenüber den anderen Meßwerten bzw. einen Mittelwert der Meßwerte darstellen, sein bzw. Meßwerte des Einschwingvorgangs sein. Es gibt mehrere Möglichkeiten, einzelne Meßwerte innerhalb einer Klasse auszusortieren:

1. Meßwerte, die zu schlecht sind (bezogen auf einen vorgegebenen Vergleichswert);
2. Meßwerte, die zu einem Einschwingvorgang gehören;
3. Meßwerte, die fehlerhaft sind;
4. Bestimmung eines repräsentativen Meßwerts als Stellvertreter für mehrere Meßwerte, indem der repräsentative Meßwert als Mittelwert der Meßwerte einer Klasse bzw. als ein Maximalwert bzw. ein Minimalwert dieser Meßwerte bestimmt wird.

Derartige Meßwerte werden bevorzugt nicht berücksichtigt, sie werden aus der jeweiligen Klasse entfernt. Dadurch ergibt sich eine deutliche Reduktion der Anzahl der Meßwerte. In einem Schritt 103 werden einzelne Klassen aussortiert. Ein Kriterium für die Aussortierung einer ganzen Klasse besteht darin, daß die Klasse weniger als eine vorgegebene Anzahl von Meßwerten enthält. In einem Schritt 104 werden die in der Anzahl reduzierten Meßwerte zur Weiterverarbeitung eingesetzt. Eine Weiterverarbeitung ist insbesondere eine Simulation und/oder ein Entwurf des technischen Systems.

**Fig.2** zeigt eine schematische Skizze eines Recovery-Boilers. Nachfolgend wird anhand des Beispiels "Recovery-Boiler" ein Ausführungsbeispiel des oben beschriebenen Verfahrens veranschaulicht.

In der Papier- und Zellstoffindustrie werden zum Aufschluß von Zellstoff verschiedene Chemikalien sowie Wärme und Elektroenergie benötigt. Aus einer eingedeckten Prozeßablauge (Schwarzlauge) lassen sich mit Hilfe des Recovery-Boilers die verwendeten Chemikalien und zusätzlich Wärmeenergie zurückgewinnen. Ein Maß für die Zurückgewinnung der Chemikalien ist von entscheidender Bedeutung für die Wirtschaftlichkeit der Gesamtanlage.

Die Schwarzlauge wird in einem Schmelzbett 201 verbrannt. Dabei bildet sich eine Alkalischmelze, die über eine Leitung 202 abfließt. Aus den Bestandteilen der Alkalischmelze werden in weiteren Verfahrensschritten die eingesetzten Chemikalien zurückgewonnen. Frei gewordene Verbrennungswärme wird zur Erzeugung von Wasserdampf genutzt. Die Verbrennung der Ablauge und damit die Rückgewinnung der Chemikalien beginnt mit der Zerstäubung der Schwarzlauge über Zerstäuberdüsen 204 in eine Brennkammer 203. Partikel der zerstäubten Schwarzlauge werden bei ihrem Fall durch das heiße Rauchgas getrocknet. Die getrockneten Laugenpartikel fallen auf das Schmelzbett 201, wobei eine erste Verbrennung und eine chemische Reduktion stattfinden. Flüchtige Bestandteile und Reaktionsprodukte gelangen in eine Oxidationszone, in der oxidierende Reaktionen ablaufen und in der die Verbrennung abgeschlossen wird.

Wichtige Zielvorgaben für die Steuerung des Recovery-Boilers sind die Dampfproduktion zur Energiegewinnung, die Einhaltung von Emissionswerten unter Umweltgesichtspunkten und die Effizienz der chemischen Reduktion.

Der Verbrennungsvorgang, und damit die Zielvorgaben, werden insbesondere durch die Luftzufuhr in drei Ebenen (Primary Air (PA), Secondary Air (SA), Tertiary Air (TA)) gesteuert. Der Gesamtprozeß unterliegt zahlreichen Einflüssen, die bei der Modellierung zu berücksichtigen sind:

a) Die Messung der Größen unterliegen oftmals starken Schwankungen;

b) Es existieren nicht gemessene und nicht meßbare Einflußgrößen;

c) Bei jeder Änderung der einstellbaren Parameter kommt es zu Einschwingvorgängen;

d) Die technische Anlage verschmutzt und wird in vorgegebenen Abständen gereinigt, wodurch im Systemverhalten jeweils ein zeitlicher Drift bewirkt wird.

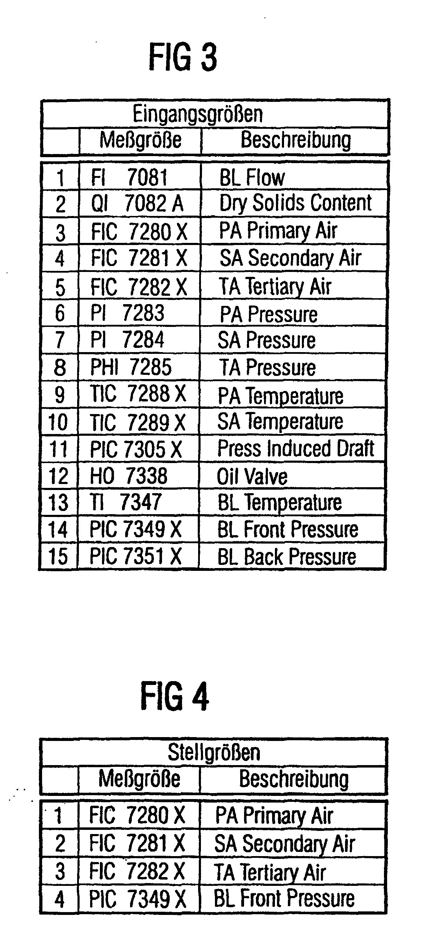

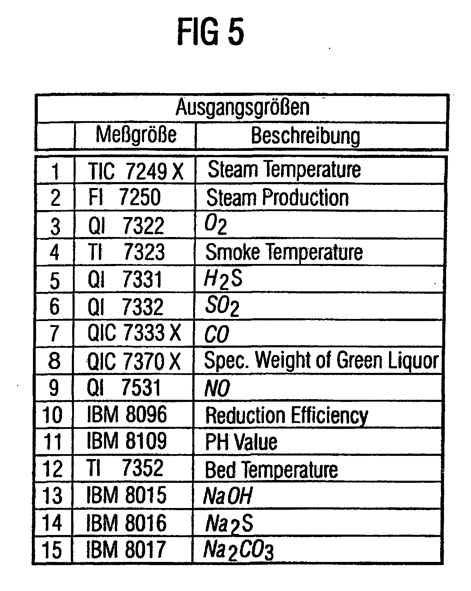

Die gemessenen Größen des Gesamtprozesses werden in Eingangsgrößen (vgl. **Fig.3**) und Ausgangsgrößen (vgl. **Fig.5**) unterteilt. Jede Minute werden Meßwerte abgespeichert. Vier der Eingangsgrößen sind gleichzeitig auch Stellgrößen (auch: einstellbare Parameter; vgl. **Fig.4**). Die Stellgrößen sind im wesentlichen als unabhängig voneinander einstellbare freie Parameter des Gesamtprozesses anzusehen. Einige der anderen Eingangsgrößen sind von den Stellgrößeh mehr oder minder abhängig. Gemäß einer Vorgabe sind beim Recovery-Boiler die Größen "BL Front Pressure" und "BL Back Pressure" stets gleich zu regeln. Die vier Stellgrößen (vgl. Fig.4) sind vorzugsweise abzuspeichern als Stellgrößen (mit dem gewünschten, voreingestellten Wert) und als Eingangsgrößen (mit dem gemessenen, realen Wert).

Beim Recovery-Boiler besteht eine Problemstellung darin, in Abhängigkeit von den einstellbaren Parametern bestimmte Zielvorgaben, die über gemessene Größen definiert werden, zu erfüllen. Hier wird eine dreistufige Vorgehensweise zur Lösung des Problems gewählt:

1. Die zu betrachtenden Zielvorgaben werden durch stochastische Methoden modelliert, wobei diese Modelle durch neue Messungen aktualisiert werden (datengetriebene, empirische Modellierung). Dabei ist es sinnvoll, nicht nur ein einziges Modell zu verwenden, sondern globale Modelle für die Identifikation interessanter Gebiete in einem durch die Zielvorgaben bestimmten Parameterraum und lokale Modelle zur exakten Berechnung optimaler Arbeitspunkte einzusetzen. Die verwendeten Modelle werden durch Gütemaße bewertet.

2. Falls die betrachteten Modelle aufgrund der Datenlage nicht hinreichend genau sind (Gütemaße), werden gezielt neue Arbeitspunkte zur Modellverbesserung ausgewertet (Experimental Design). Ferner werden durch Verwendung globaler stochastischer Optimierungsverfahren bzgl. der Zielvorgaben attraktive Gebiete in Abhängigkeit vom aktuellen globalen Modell identifiziert.

3. Für die lokale Optimierung werden lokale Modelle konstruiert und die zur Verfügung stehenden Datensätze gegebenenfalls gezielt erweitert (Experimental Design).

Bei den Zielvorgaben handelt es sich um physikalischtechnische bzw. betriebswirtschaftliche Kriterien, die in der Regel Randbedingungen und/oder Sicherheitsbedingungen entsprechen müssen. Häufig sind mehrere dieser Kriterien gleichzeitig zu betrachten. Die Verwendung eines stochastischen Modells kann insbesondere dazu verwendet werden, die zu optimierenden Zielgrößen und ihre Abhängigkeit von den einzustellenden Parametern im Rechner zu simulieren. Dies ist dann notwendig, wenn Messungen sehr kostenintensiv bzw. sehr zeitaufwendig sind. Bei Sicherheitsanforderungen können mögliche Gefahrensituationen vermieden werden.

Beim Recovery-Boiler ist eine Online-Optimierung, die auf mehreren Daten basiert, notwendig, weil die physikalischchemischen Prozesse nicht mit ausreichender Genauigkeit quantitativ modelliert werden können und weil das Verhalten der Anlage im Verlauf des Betriebs Schwankungen unterliegt. Das Wissen über dieses Verhalten muß stetig durch gezielte Wahl neuer Arbeitspunkte erweitert werden. Daher empfiehlt sich im Rahmen der Online-Optimierung das bereits beschriebene dreistufige Vorgehen der stochastischen Modellierung und der mathematischen Optimierung.

BESCHREIBUNG DER EINGANGSGRÖSSEN

Die a Eingangsgrößen ($a \in \mathbb{N}$, $\mathbb{N}$ : Menge der natürlichen Zahlen) sind im allgemeinen von n Stellgrößen n $\in \mathbb{N}$ und von Zufallseffekten abhängig. Sie können wie folgt beschrieben werden:

Es seien $(\Omega, \mathcal{S}, \mathcal{P})$ ein Wahrscheinlichkeitsraum und $\mathcal{B}^v$ eine Borelsche $\sigma$-Algebra über $\mathbb{R}^v$ ($\mathbb{R}$ : Menge der reellen Zahlen) für jedes $v \in \mathbb{N}$. Die Eingangsgrößen werden über eine $\mathcal{B}^n \times \mathcal{S}$ -$\mathcal{B}^a$ -meßbare Abbildung $\varphi$ dargestellt:

$$\varphi : \mathbb{R}^n \times \Omega \rightarrow \mathbb{R}^a \qquad\qquad (1).$$

Die Definitionsmenge der Abbildung $\varphi$ ist ein kartesisches Produkt zweier Mengen. Betrachtet man die jeweiligen Projektionen auf die Einzelmengen, so erhält man folgende Abbildungen:

$$\varphi_x: \Omega \rightarrow \mathbb{R}^a, \ \omega \rightarrow \varphi(x, \omega) \quad \text{für alle } x \in \mathbb{R}^n \qquad (2),$$

$$\varphi^\omega: \mathbb{R}^n \rightarrow \mathbb{R}^a, \ x \rightarrow \varphi(x, \omega) \quad \text{für alle } \omega \in \Omega \qquad (3).$$

$$\left\{ \varphi_x; \ x \in \mathbb{R}^n \right\}$$

ist ein stochastischer Prozeß mit einer Indexmenge $\mathbb{R}^n$ und eine Abbildung $\varphi^\omega$ ist für jedes Ereignis $\omega \in \Omega$ ein Pfad dieses stochastischen Prozesses.

Beim Recovery-Boiler ist n=4 und a=14 (nach Elimination der Größe "BL Back Pressure").

Aufgrund der geforderten Meßbarkeit der Abbildung $\varphi_x$ ist für jedes $x \in \mathbb{R}^n$ die Abbildung $\varphi_x$ eine Zufallsvariable. Unter geeigneten Zusatzvoraussetzungen können Erwartungswerte und höhere Momente betrachtet werden. Dieser Zugang ermöglicht den Schritt von stochastischen Modellen zu deterministischen Optimierungsproblemen. Bei einem deterministischen Optimierungsproblem ist die Zielfunktion direkt mittels einer Variablen einstellbar, wohingegen die stochastische Größe die Zielfunktion beeinflußt, aber keine gezielte Einstellung ermöglicht.

BESCHREIBUNG DER AUSGANGSGRÖßEN

Das Prozeßmodell M des Recovery-Boilers wird als Funktion in Abhängigkeit von den Eingangsgrößen und weiteren Zufallseffekten beschrieben. Dabei sei $(\Omega, \mathcal{S}, \mathcal{P})$ der obige Wahrscheinlichkeitsraum. Das Prozeßmodell M ist dann eine $\mathcal{B}^a \times \mathcal{S}$ -$\mathcal{B}^b$ -meßbare Abbildung:

$$M : \mathbb{R}^a \times \Omega \rightarrow \mathbb{R}^b \qquad\qquad (4),$$

wobei b die Anzahl der Ausgangsgrößen bezeichnet.

Da der Recovery-Boiler einem zyklischen zeitlichen Drift unterliegt (von Reinigungsphase zu Reinigungsphase), ist zudem eine Beschreibung mit einem Zeitparameter denkbar. Die Ausgangsgrößen lassen sich durch $\mathcal{B}^n \times \mathcal{S}$ -$\mathcal{B}^b$ -meßbare Abbildungen $\psi$ darstellen:

$$\psi : \mathbf{R}^n \times \Omega \to \mathbf{R}^b \qquad (5),$$

$$(x, \omega) \to M\big(\varphi(x, \omega), \omega\big) \qquad (6).$$

Betrachtet man die jeweiligen Projektionen auf die Einzelmengen der Definitionsmenge, so erhält man folgende Abbildungen

$$\psi_x : \Omega \to \mathbf{R}^b, \ \omega \to \psi(x, \omega) \quad \text{für alle } x \in \mathbf{R}^n \qquad (7),$$

$$\psi^\omega : \mathbf{R}^n \to \mathbf{R}^b, \ x \to \psi(x, \omega) \quad \text{für alle } \omega \in \Omega \qquad (8).$$

$$\left\{ \psi_x ; \ x \in \mathbf{R}^n \right\}$$

ist ein stochastischer Prozeß mit einer Indexmenge $\mathbf{R}^n$ und die Abbildung $\psi^\omega$ ist für jedes $\omega \in \Omega$ ein Pfad dieses stochastischen Prozesses.

Beim Recovery-Boiler ist b=15.

Die Tatsache, daß bei der Definition von $\psi$ zwischen den verwendeten Ereignissen $\omega$ nicht unterschieden wird, bedeutet keine Einschränkung, da $\Omega$ als kartesisches Produkt aus einem $\Omega_1$ und einem $\Omega_2$ dargestellt werden kann. Die obige Darstellung umfaßt somit auch das Modell:

$$\psi : \mathbf{R}^n \times \Omega_1 \times \Omega_2 \to \mathbf{R}^b \qquad (9),$$

$$(x, \omega_1, \omega_2) \to M\big(\varphi(x, \omega_1), \omega_2\big) \qquad (10).$$

BESCHREIBUNG DER ZUR VERFÜGUNG STEHENDEN DATENSÄTZE

Mit den Beschreibungen in den beiden vorangegangenen Abschnitten kann man die Eingangsgrößen und die Ausgangsgrößen gemeinsam zu Meßgrößen $\Phi$ zusammenfassen. $\Phi$ ist eine $\mathcal{B}^n \times \mathcal{S}$ - $\mathcal{B}^m$ -meßbare Abbildung mit m = a + b und

$$\Phi : \mathbf{R}^n \times \Omega \to \mathbf{R}^m \qquad (11),$$

$$(x, \omega) \to \begin{pmatrix} \varphi(x, \omega) \\ \psi(x, \omega) \end{pmatrix} \qquad (12).$$

Betrachtet man wieder die jeweiligen Projektionen auf die Einzelmengen der Definitionsmenge, so erhält man folgende Abbildungen:

$$\Phi_x: \Omega \to \mathbf{R}^m, \quad \omega \to \Phi(x, \omega) \qquad \text{für alle } x \in \mathbf{R}^n \qquad\qquad (13),$$

$$\Phi^\omega: \mathbf{R}^n \to \mathbf{R}^m, \quad x \to \Phi(x, \omega) \qquad \text{für alle } \omega \in \Omega \qquad\qquad (14).$$

$$\left\{ \Phi_x; \ x \in \mathbf{R}^n \right\}$$

ist ein stochastischer Prozeß mit einer Indexmenge $\mathbf{R}^n$ und die Abbildung $\Phi^\omega$ ist für jedes $\omega \in \Omega$ ein Pfad dieses stochastischen Prozesses.

Für jedes gewählte Stellgrößentupel x werden beim Recovery-Boiler viele Realisierungen von $\Phi_x$ ermittelt und abgespeichert, d.h. zu jedem $x_j \in \mathbf{R}^n$ werden zahlreiche Realisierungen

$$\Phi_{jk} := \Phi\left(x_j, \omega_{jk}\right) \qquad\qquad (15)$$

mit

$\omega_{jk} \in \Omega;\ k = 1,2,...,v_j\ ;$

$v_j \in \mathbf{N}\ ;\ j = 1,2,...,u;\ u \in \mathbf{N}$

betrachtet. Die gespeicherten Datensätze $D_{jk}$ des Recovery-Boilers sind also (n + m)-Tupel:

$$D_{jk} = \begin{pmatrix} x_j \\ \Phi_{jk} \end{pmatrix}, \qquad k = 1,2,\ldots,v_j;\ j = 1,2,\ldots,u \qquad\qquad (16).$$

Dabei wird $D_{j_1 k_1}$ vor $D_{j_2 k_2}$ abgespeichert, wenn

$$\left(j_1 < j_2\right) \vee \left(\left(j_1 = j_2\right) \wedge \left(k_1 < k_2\right)\right)$$

gilt.

DATENKOMPRESSION DURCH KLASSENEINTEILUNG DER PARAMETER

Da für jedes Stellgrößentupel x im allgemeinen mehrere Realisierungen von $\Phi_x$ vorliegen, bietet sich aufgrund der komplexen stochastischen Eigenschaften des zu betrachtenden Prozesses als erster Schritt der statistischen Datenanalyse eine Klasseneinteilung der Parameter durch Bildung arithmetischer Mittelwerte an. Zudem werden offensichtlich fehlerhafte Datensätze ausgesondert. Ein offensichtlich fehlerhafter Datensatz ist bspw. eine physikalisch unmögliche Messung, der insbesondere aufgrund einer vorgenommenen Einstellung real gar nicht vorkommen kann.

Vorgehensweise:

1. Datensätze, bei denen die Größe "BL Front Pressure" ungleich der Größe "BL Back Pressure" ist, werden aussortiert, da diese beiden Werte nach Vorgabe der Anlagensteuerung gleich sein müssen. Der Datenverlust ist sehr gering.

2. Die Datensätze werden auf Klassen aufgeteilt, in denen die vier Einstellparameter (PA, SA, TA, BL Front Pressure, siehe oben) zeitlich aufeinanderfolgend konstant sind, d.h. die j-te Klasse besteht aus den Datensätzen $D_{j.}$.

3. Klassen, in denen sich weniger als 30 Datensätze befinden, werden ausgesondert, damit Einschwingvorgänge keinen großen Einfluß haben.

4. Für jede Klasse werden ein arithmetischer Mittelwert $\overline{\Phi}_j$ und eine empirische Standardabweichung $s_j$ für alle Meßgrößen ermittelt:

$$\overline{\Phi}_j = \frac{1}{v_j} \cdot \sum_{k=1}^{v_j} \Phi_{jk} \qquad\qquad (17),$$

$$s_j = \left( \begin{array}{c} \left( \frac{1}{v_j - 1} \cdot \sum_{k=1}^{v_j} \left( \Phi_{jk}^{(1)} - \overline{\Phi}_j^{(1)} \right)^2 \right)^{\frac{1}{2}} \\ \vdots \\ \left( \frac{1}{v_j - 1} \cdot \sum_{k=1}^{v_j} \left( \Phi_{jk}^{(m)} - \overline{\Phi}_j^{(m)} \right)^2 \right)^{\frac{1}{2}} \end{array} \right) \qquad\qquad (18).$$

5. Klassen bei denen die Mittelwerte für die Größen PA, SA, TA oder BL Front Pressure zu weit von den entsprechenden Einstellparametern entfernt sind, werden ausgesondert. Auf diesen Klassen konnten also die Einstellwerte nicht erreicht werden.

STATISTISCHE KENNGRÖßEN FÜR DIE GEGEBENEN KLASSEN UND IHRE GRAPHISCHE DARSTELLUNG

Neben den arithmetischen Mittelwerten und den empirischen Standardabweichungen, die für die einzelnen Klassen bestimmt wurden, wird noch eine gemeinsame Standardabweichung s bestimmt gemäß

$$s = \begin{pmatrix} \left( \dfrac{1}{v-1} \cdot \sum\limits_{j=1}^{u} \left( v_j - 1 \right) s_j^{(1)2} \right)^{\frac{1}{2}} \\ \vdots \\ \left( \dfrac{1}{v-1} \cdot \sum\limits_{j=1}^{u} \left( v_j - 1 \right) s_j^{(m)2} \right)^{\frac{1}{2}} \end{pmatrix} \qquad (19)$$

Dabei steht u für die Anzahl der Klassen (hier 205) und v für die Summe der $v_j$, d.h. v ist die Anzahl aller verwendeten Meßwerte (hier 38915).

Literaturverzeichnis:

[1] WO 90 16048 A (LISZKA LUDWIK) 27. Dezember 1990 (1990-12-27)

**Patentansprüche**

1.  Verfahren zur Reduktion einer Anzahl von Meßwerten eines technischen Systems,

    a) bei dem die Meßwerte entsprechend vorgegebenen Kriterien in Klassen eingeteilt werden;
    b) bei dem Meßwerte einer Klasse bewertet werden und Meßwerte, deren Bewertung unterhalb eines vorgegebenen ersten Schwellwerts liegt, aussortiert werden;
    c) bei dem die Klassen bewertet werden und eine Klasse, für die die Bewertung unterhalb eines vorgegebenen zweiten Schwellwerts liegt, aussortiert wird.

2.  Verfahren nach einem der vorhergehenden Ansprüche,
    bei dem ein Kriterium für die Klasseneinteilung darin besteht, daß pro Klasse Meßwerte zu einer Vorgabe von Einstellparametern des technischen Systems bestimmt werden.

3.  Verfahren nach einem der vorhergehenden Ansprüche,
    bei dem in einer Klasse Meßwerte zu einem Einschwingvorgang und/oder fehlerhafte Meßwerte bestimmt und aussortiert werden.

4.  Verfahren nach einem der vorhergehenden Ansprüche,
    bei dem in einer Klasse die Anzahl der Meßwerte reduziert wird, indem mindestens ein repräsentativer Wert für die Meßwerte der Klasse ermittelt wird.

5.  Verfahren nach Anspruch 4,
    bei dem der repräsentative Wert bestimmt wird als

    a) ein Mittelwert der Meßwerte der Klasse, oder
    b) ein Maximalwert bzw. ein Minimalwert der Meßwerte der Klasse;
    c) ein Median.

6.  Verfahren nach einem der vorhergehenden Ansprüche,
    bei dem eine Klasse aussortiert wird, die weniger als eine vorgegebene Anzahl Meßwerte aufweist.

7.  Verfahren nach einem der vorhergehenden Ansprüche,
    bei dem in einer Klasse diejenigen Meßwerte aussortiert werden, die um mehr als einen vorgegebenen Schwellwert von einem vorgebbaren Wert verschieden sind.

**8.** Verfahren nach einem der vorhergehenden Ansprüche,
bei dem die reduzierten Meßwerte zur Simulation und/oder zum Entwurf des technischen Systems eingesetzt werden.

**9.** Anordnung zur Reduktion einer Anzahl von Meßwerten eines technischen Systems,
mit einer Prozessoreinheit, die derart eingerichtet ist, daß

a) die Meßwerte entsprechend vorgegebenen Kriterien in Klassen aufgeteilt werden;
b) Meßwerte einer Klasse bewertet werden und Meßwerte, deren Bewertung unterhalb eines vorgegebenen ersten Schwellwerts liegt, aussortiert werden;
c) die Klassen bewertet werden und eine Klasse, für die die Bewertung unterhalb eines vorgegebenen zweiten Schwellwerts liegt, aussortiert wird.

**10.** Anordnung nach Anspruch 9,
bei der die Prozessoreinheit derart eingerichtet ist, daß die Klassen bewertet werden und eine Klasse, für die die Bewertung unterhalb eines vorgegebenen zweiten Schwellwerts liegt, aussortiert wird;

## Revendications

**1.** Procédé destiné à la réduction d'un nombre de valeurs de mesure d'un système technique,

a) dans lequel les valeurs de mesure sont réparties en classes en fonction de critères donnés;
b) dans lequel les valeurs de mesure d'une classe sont évaluées et les valeurs de mesure, dont l'évaluation est inférieure à une première valeur seuil donnée, sont éliminées;
c) dans lequel les classes sont évaluées et une classe, pour laquelle l'évaluation est inférieure à une deuxième valeur seuil, est éliminée.

**2.** Procédé selon l'une des revendications précédentes
dans lequel un critère pour la répartition en classes consiste en ce que, par classe, on détermine des valeurs de mesure correspondant à une assignation des paramètres de commande du système technique.

**3.** Procédé selon l'une des revendications précédentes
dans lequel, dans une classe, on détermine et élimine des valeurs de mesure faisant partie d'un processus de transition et/ou des valeurs de mesure défectueuses.

**4.** Procédé selon l'une des revendications précédentes
dans lequel, dans une classe, on réduit le nombre des valeurs de mesure en déterminant au moins une valeur représentative pour les valeurs de mesure de la classe.

**5.** Procédé selon la revendication 4
dans lequel la valeur représentative est déterminée en tant que

a) valeur moyenne des valeurs de mesure de la classe ou
b) valeur maximum ou valeur minimum des valeurs de mesure de la classe;
c) valeur médiane.

**6.** Procédé selon l'une des revendications précédentes
dans lequel une classe est éliminée si elle comporte un nombre de valeurs de mesure inférieur à un nombre donné.

**7.** Procédé selon l'une des revendications précédentes
dans lequel, dans une classe, on élimine les valeurs de mesure dont la différence avec une valeur, qui peut être prédéterminée, est supérieure à une valeur seuil donnée.

**8.** Procédé selon l'une des revendications précédentes
dans lequel les valeurs de mesure réduites sont utilisées pour la simulation et/ou le développement du système technique.

9. Dispositif destiné à la réduction d'un nombre de valeurs de mesure d'un système technique, comportant une unité à processeur conçue de telle sorte que

   a) les valeurs de mesure sont réparties en classes en fonction de critères donnés;
   b) les valeurs de mesure d'une classe sont évaluées et les valeurs de mesure, dont l'évaluation est inférieure à une première valeur seuil donnée, sont éliminées;
   c) les classes sont évaluées et une classe, pour laquelle l'évaluation est inférieure à une deuxième valeur seuil, est éliminée.

10. Dispositif selon la revendication 9
   dans lequel l'unité à processeur est conçue de telle sorte que les classes sont évaluées et une classe, pour laquelle l'évaluation est inférieure à une deuxième valeur seuil donnée, est éliminée.


**Claims**

1. Method of reducing a number of measured variables of a technical system,

   a) in which the measured values are divided into classes in accordance with predefined criteria;
   b) in which the measured values in a class are assessed and measured values whose assessment lies below a predefined first threshold value are screened out;
   c) in which the classes are assessed and a class for which the assessment lies below a predefined second threshold value is screened out.

2. Method according to one of the preceding claims, in which one criterion for the division into classes consists in that, for each class, measured values relating to a predefinition of setting parameters of the technical system are determined.

3. Method according to one of the preceding claims, in which, in one class, measured values relating to a transient process and/or erroneous measured values are determined and screened out.

4. Method according to one of the preceding claims, in which, in a class, the number of measured values is reduced in that at least one representative value for the measured values in the class is determined.

5. Method according to Claim 4, in which the representative value is determined as

   a) an average of the measured values in the class, or
   b) a maximum value or a minimum value of the measured values in the class;
   c) a median.

6. Method according to one of the preceding claims, in which a class which has fewer than a predefined number of measured values is screened out.

7. Method according to one of the preceding claims, in which, in a class, those measured values which differ from a predefinable value by more than a predefinable threshold value are screened out.

8. Method according to one of the preceding claims, in which the reduced measured values are used for the simulation and/or for the draft design of the technical system.

9. Arrangement for reducing a number of measured values of a technical system, having a processor unit which is set up in such a way that

   a) the measured values are divided into classes in accordance with predefined criteria;
   b) measured values in a class can be assessed and measured values whose assessment lies below a predefined first threshold value are screened out;
   c) the classes are assessed and a class for which the assessment lies below a predefined second threshold value is screened out.

**10.** Arrangement according to Claim 9, in which the processor unit is set up in such a way that the classes are assessed and a class for which the assessment lies below a predefined second threshold value is screened out.

## FIG 1

| Klasseneinteilung der Meßwerte | ~101 |

↓

| Aussortieren von einzelnen Meßwerten innerhalb einer Klasse | ~102 |

↓

| Aussortieren einzelner Klassen | ~103 |

↓

| Weiterverarbeitung der Meßwerte | ~104 |

## FIG 2

$O_2$  CO  $NO_x$  $SO_2$

Steam Generation

Tertiary Air
Liquor Guns
204

204

Back Flow    Back Flow

Brennkammer
203

Secondary Air

Primary Air

Char Bed

202    201

$Na_2S$  $Na_2CO_3$  $Na_2SO_4$

# FIG 3

| | Eingangsgrößen | |
|---|---|---|
| | Meßgröße | Beschreibung |
| 1 | FI 7081 | BL Flow |
| 2 | QI 7082 A | Dry Solids Content |
| 3 | FIC 7280 X | PA Primary Air |
| 4 | FIC 7281 X | SA Secondary Air |
| 5 | FIC 7282 X | TA Tertiary Air |
| 6 | PI 7283 | PA Pressure |
| 7 | PI 7284 | SA Pressure |
| 8 | PHI 7285 | TA Pressure |
| 9 | TIC 7288 X | PA Temperature |
| 10 | TIC 7289 X | SA Temperature |
| 11 | PIC 7305 X | Press Induced Draft |
| 12 | HO 7338 | Oil Valve |
| 13 | TI 7347 | BL Temperature |
| 14 | PIC 7349 X | BL Front Pressure |
| 15 | PIC 7351 X | BL Back Pressure |

# FIG 4

| | Stellgrößen | |
|---|---|---|
| | Meßgröße | Beschreibung |
| 1 | FIC 7280 X | PA Primary Air |
| 2 | FIC 7281 X | SA Secondary Air |
| 3 | FIC 7282 X | TA Tertiary Air |
| 4 | PIC 7349 X | BL Front Pressure |

# FIG 5

| Ausgangsgrößen | | |
|---|---|---|
| | Meßgröße | Beschreibung |
| 1 | TIC 7249 X | Steam Temperature |
| 2 | FI 7250 | Steam Production |
| 3 | QI 7322 | $O_2$ |
| 4 | TI 7323 | Smoke Temperature |
| 5 | QI 7331 | $H_2S$ |
| 6 | QI 7332 | $SO_2$ |
| 7 | QIC 7333 X | $CO$ |
| 8 | QIC 7370 X | Spec. Weight of Green Liquor |
| 9 | QI 7531 | $NO$ |
| 10 | IBM 8096 | Reduction Efficiency |
| 11 | IBM 8109 | PH Value |
| 12 | TI 7352 | Bed Temperature |
| 13 | IBM 8015 | $NaOH$ |
| 14 | IBM 8016 | $Na_2S$ |
| 15 | IBM 8017 | $Na_2CO_3$ |